# EUROPÄISCHE PATENTSCHRIFT

(11) **EP 3 157 741 B1**
(45) Veröffentlichungstag und Bekanntmachung des Hinweises auf die Patenterteilung: **09.09.2020**
(21) Anmeldenummer: 15718822.8
(22) Anmeldetag: 14.04.2015
(51) Int. Cl.: B29D 30/30, B29D 30/42, B29D 30/46, B29C 65/00, B29C 65/08, B29C 65/18, B29L 30/00, B26D 3/00, B26D 7/02

(54) **VERFAHREN ZUM HERSTELLEN EINER KARKASSEINLAGE**
METHOD FOR PRODUCING A CARCASS INSERT
PROCÉDÉ DE PRODUCTION D'UNE NAPPE DE CARCASSE

(30) Priorität: 17.06.2014 DE 102014211561
(43) Veröffentlichungstag der Anmeldung: 26.04.2017
(73) Patentinhaber: Continental Reifen Deutschland GmbH, 30165 Hannover (DE)
(72) Erfinder: SCHRAMM, Oliver, 31177 Harsum (DE); KNEUSSEL, Ewald, 30890 Barsinghausen (DE); SU, Dejun, 30159 Hannover (DE)
(74) Vertreter: Widjaja, Wira
(86) Internationale Anmeldenummer: PCT/EP2015/057997
(87) Internationale Veröffentlichungsnummer: WO 2015/192992

(56) Entgegenhaltungen:
- EP-A1- 1 072 395
- EP-A1- 1 108 510
- EP-A2- 2 669 068
- DE-A1- 2 638 884
- DE-A1- 3 004 894
- JP-A- S5 591 649
- JP-A- 2010 208 090
- US-A- 3 904 457

## Beschreibung

Die Erfindung betrifft ein Verfahren zum Herstellen einer Karkasseinlage eines Fahrzeugluftreifens aus einer Materialbahn, welche aus einer Kautschukmischung besteht, in der parallel zueinander verlaufende Festigkeitsträger eingebettet sind, mit folgenden Verfahrensschritten:
- lokales Dehnen der Materialbahn in Längsrichtung, wobei ein gedehnter Abschnitt gebildet wird, in welchem der gegenseitige lichte Abstand der Festigkeitsträger gegenüber ihrem gegenseitigen Abstand im nicht gedehnten Zustand zumindest doppelt so groß ist,
- mittiges Schneiden des gedehnten Abschnittes, sodass ein Materialbahnstück entsteht, dessen gedehnte Endabschnitte den Spleißbereich enthalten bzw. bilden,
- Aufwickeln der einzelnen Materialbahnstücke auf eine Karkasstrommel und überlappendes Spleißen der Endabschnitte unter äußerer Druckeinwirkung.

Es ist bekannt und üblich, Endabschnitte von Materialbahnen überlappend oder stumpf zu spleißen, um ringförmig vorgeformte Stahl- oder Textilkordkarkassen für Reifen herzustellen.

Ein Verfahren der eingangs genannten Art ist beispielsweise aus der EP 1 072 395 A1 bekannt. Zumindest eines der für eine Überlappung vorgesehenen Enden der Materialbahn wird einer plastischen Verformung, die mit einer Längenzunahme verbunden ist, unterworfen, wobei die Fadendichte der Festigkeitsträger, in dem für die Überlappung vorgesehenen Bereich reduziert wird.

Beim Überlappspleißen überlappen die Endabschnitte direkt auf der Karkasstrommel. Im fertigen Reifen kann der Überlappungsbereich negative Auswirkungen auf Reifeneigenschaften im Normalbetrieb haben, insbesondere eine Unwucht und eine Ungleichförmigkeit der hergestellten Reifen. Ein weiteres Problem sind die im Überlappungsbereich entstehenden Einschnürungen in den Seitenwänden. Verfahren und Vorrichtungen zum stumpfen Spleißen sind aus der DE 10 2004 024 715 A1, der DE 10 2005 023 925 A1 und der EP 1 108 510 A1 bekannt. Ein Verfahren zum Überlappspleißen von Karkasseinlagen auf einer Trommel ist aus der Patentanmeldeschrift JP 2010 208 090 A bekannt.

Der Erfindung liegt daher die Aufgabe zu Grunde, ein Verfahren der eingangs genannten Art zur Verfügung zu stellen, mit dem ein Überlappungsspleiß derart durchführbar ist, dass keine oder kaum mehr eine Einschnürung in der Seitenwand auftritt und die Gleichförmigkeit des Reifens verbessert wird. Des Weiteren soll der Dehn- und Schneidvorgang einer überlappend zu spleißenden Materialbahn sowie der Transport der Materialbahn auf die Karkasstrommel auf rationelle Weise durchführbar sein.

Gemäß den Merkmalen des Anspruchs 1 wird die gestellte Aufgabe erfindungsgemäß gelöst durch
- das Transportieren der Materialbahn (1) mittels eines Zubringers mit Zubringerpfannen (3, 4) zur Karkasstrommel (5) und
- ein Durchführen des lokalen Dehnens der Materialbahn (1) und des mittigen Schneidens des gedehnten Abschnittes (8) am Zubringer, wobei die Materialbahn (1) lokal derart gedehnt wird, dass der gedehnte Abschnitt (8) zumindest acht Festigkeitsträger (2) enthält.

Das erfindungsmäßige Verfahren ermöglicht ein Bilden eines Spleißbereiches aus Materialbahnstücken zur Fertigung von Karkasseinlagen, in welchem die Dichte der Festigkeitsträger zumindest im Wesentlichen der Dichte der Festigkeitsträger in der restlichen Materialbahn bzw. Karkasseinlage entspricht. Dadurch wird das Entstehen von Seitenwandeinschnürungen vermieden oder zumindest deutlich verringert und es wird die Gleichförmigkeit des Reifens verbessert. Darüber hinaus ermöglicht das Verfahren ein besonders rationelles Durchführen der Verfahrensschritte.

Bei einer bevorzugten Ausführungsform des erfindungsmäßigen Verfahrens wird die Materialbahn vor dem Dehnvorgang mittels zweier Klemmvorrichtungen gegen zwei benachbarte Zubringerpfannen gedrückt und derart gegenüber den Zubringerpfannen fixiert, wobei nach dem Klemmvorgang der gegenseitige Abstand der Zubringerpfannen zur Durchführung des Dehnvorgangs vergrößert wird, wodurch eine Dehnung der Materialbahn zur Bildung der im nachfolgenden Spleißvorgang überlappenden Endabschnitte auf eine konstruktiv einfache und rationelle Weise ermöglicht wird.

Bei einer weiteren bevorzugten Ausführungsform des erfindungsmäßigen Verfahrens wird die Materialbahn über einen Abschnitt, der bis zu fünfzehn Festigkeitsträger umfasst, gedehnt, wodurch ein für eine besonders gute Verbindung relativ großer Überlappungsbereich für den Spleißvorgang zur Verfügung gestellt wird.

Um den Spleißbereich optimal zu verfestigen, können gemäß der Erfindung unterschiedliche Verfahren angewandt werden. So können die Endabschnitte auf der Karkasstrommel mittels eines Stempels gespleißt werden, welcher mittels Ultraschall in Schwingung versetzt und/oder erhitzt werden kann. Ein Spleißen mittels einer Rollsonotrode ist ebenfalls möglich und besonders effektiv. Zusätzlich kann die Rollsonotrode erhitzt werden. Auch ein Spleißen mittels einer Rolle ist möglich, wobei auch diese im Ultraschallbereich in Schwingungen versetzt werden kann und/oder erhitzt werden kann. Beim Spleißen können zudem die Festigkeitsträger in dem einen Endabschnitt weiter in die Zwischenräume der Festigkeitsträger des anderen Endabschnittes hineingepresst werden.

Weitere Merkmale, Vorteile und Einzelheiten der Erfindung werden nun anhand der Zeichnung näher erläutert. Dabei zeigen

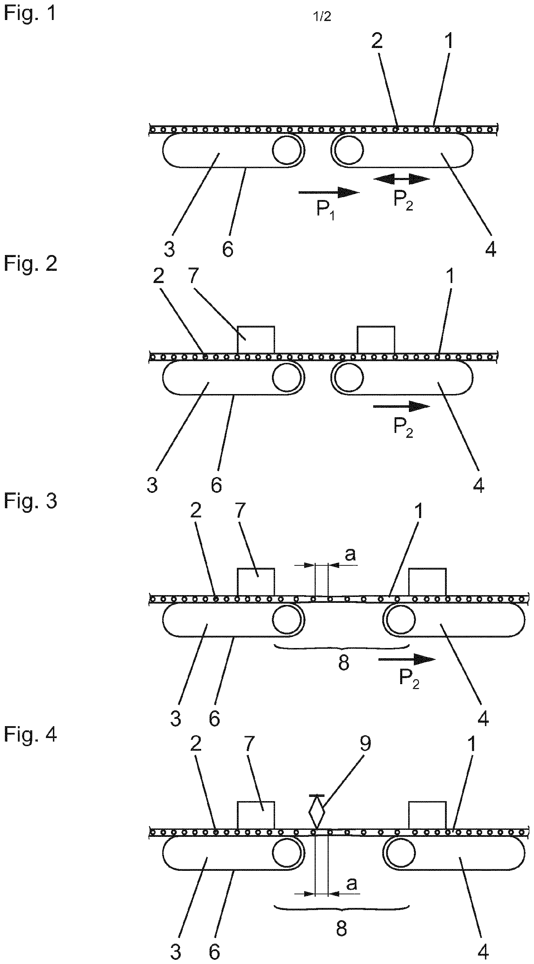

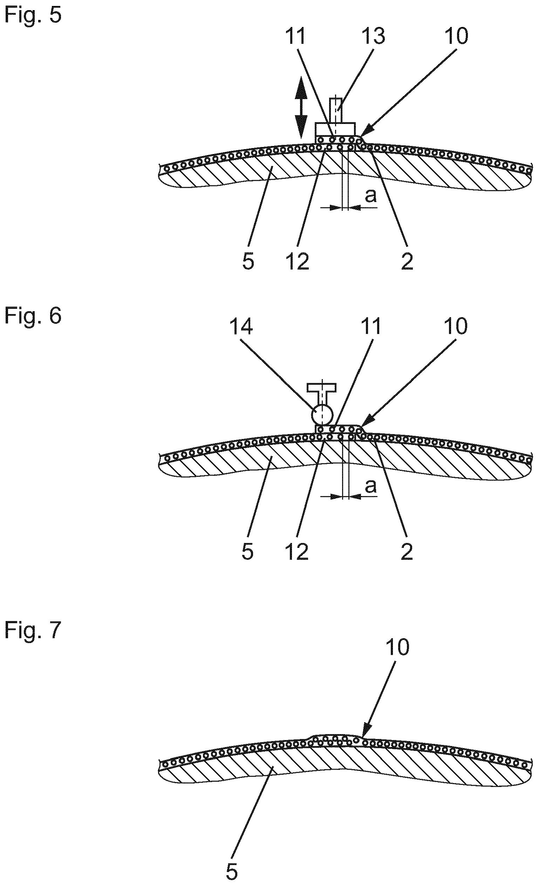

Fig. 1 bis Fig. 6 anhand von schematischen Darstellungen Verfahrensschritte zur Herstellung einer Karkasseinlage gemäß einer Ausführungsform der Erfindung und Fig. 7 einen gemäß der Erfindung hergestellten Spleißbereich.

Ein in Radialbauart hergestellter Fahrzeugluftreifen weist eine ein- oder mehrlagige Karkasseinlage auf, welche aus einer Materialbahn hergestellt wird, die aus Festigkeitsträgern, welche parallel zueinander verlaufen und in eine Kautschukmischung eingebettet sind, besteht. Die Festigkeitsträger können aus textilen Materialien oder aus Stahlkord bestehen. Die Materialbahn ist in einer Kassette aufgewickelt und wird auf einem Zubringer geschnitten, das beim Schnitt gebildete Materialbahnstück wird vom Zubringer zu einer Karkasstrommel transportiert und nachfolgend auf die Karkasstrommel aufgebracht.

Fig. 1 zeigt schematisch eine Seitenansicht eines Teilbereiches eines eine Anzahl von Zubringerpfannen aufweisenden Zubringers zum Transport einer Festigkeitsträger 2 enthaltenden Materialbahn 1 für eine Karkasseinlage, wobei die Transportrichtung durch den Pfeil P₁ gekennzeichnet ist. In Fig. 1 sind zwei in Transportrichtung aufeinander folgende Zubringerpfannen 3, 4 dargestellt, welche über umlaufende Transportbänder 6 verfügen. Zumindest eine der beiden Zubringerpfannen 3, 4 ist parallel zur Transportrichtung - in beide Richtungen - bewegbar angeordnet. Bei der dargestellten Ausführungsform ist die rechte Zubringerpfanne 4 in Richtung des Doppelpfeils P₂ um einige Zentimeter bewegbar.

In Fig. 2 ist der erste Verfahrensschritt schematisch dargestellt. Im Zuge dieses Verfahrensschrittes werden sämtliche Zubringerpfannen, daher auch die Zubringerpfannen 3, 4, angehalten. Bei stehenden Zubringerpfannen 3, 4 wird die Materialbahn 1 über je eine Klemmvorrichtung 7 gegen die Zubringerpfannen 3, 4 gedrückt und derart gegenüber den Zubringerpfannen 3, 4 fixiert. Die Klemmung erfolgt derart, dass der zwischen den Klemmvorrichtungen 7 befindliche Abschnitt 8 der Materialbahn 1 zumindest acht und insbesondere bis zu fünfzehn Festigkeitsträger 2 enthält. Anschließend wird die auslenkbare Zubringerpfanne 4 von der anderen Zubringerpfanne 3 wegbewegt. Dabei wird die Materialbahn 1 in ihrer Längsrichtung gedehnt, wobei die Dehnung, wie in Fig. 3 gezeigt, derart erfolgt, dass im Bereich des gedehnten Abschnittes 8 der gegenseitige lichte Abstand a zwischen benachbarten Festigkeitsträgern 2 zumindest das Doppelte des ursprünglichen lichten Abstandes beträgt.

Der nachfolgende Verfahrensschritt ist schematisch in Fig. 4 gezeigt. Eine Trennvorrichtung 9 wird an den gedehnten Abschnitt 8 der Materialbahn 1, vorzugsweise von oben, herangefahren. Bei der Trennvorrichtung 9 handelt es sich insbesondere um ein erhitztes Messer, beispielsweise ein Haken- oder ein Rollmesser. Die Trennvorrichtung 9 durchtrennt die Materialbahn 1 in der Mitte des gedehnten Abschnitts 8 zwischen zwei benachbarten Festigkeitsträgern 2, wodurch ein Materialbahnstück 10 (in Fig. 5 und Fig. 6 bezeichnet) entsteht - der vorhergehende analoge Schnittvorgang hat ja bereits das vordere nicht dargestellte Ende geschnitten. Durch Wiederholen der bisher beschriebenen Verfahrensschritte werden nacheinander mehrere Materialbahnstücke 10 hergestellt. Jedes Materialbahnstück 10 weist zwei, im Wesentlichen gleich lange, gedehnte Endabschnitte 11, 12 auf, die, bedingt durch die Dehnung, eine geringfügig geringere Dicke als die Materialbahn 1 aufweisen. Das Materialbahnstück 10 ist in einer Länge zugeschnitten, in welcher die Endabschnitte 11, 12 nach dem Wickeln auf die Karkasstrommel 5 (Fig. 5, Fig. 6) überlappen, wobei der überlappende Bereich die gedehnten Endabschnitte 11, 12 enthält und den Spleißbereich bildet.

Fig. 5 und Fig. 6 zeigen Varianten des nächsten Schrittes des Verfahrens, des Spleißvorganges. Durch Einwirken von Druck auf den Spleißbereich werden die gedehnten Endabschnitte 11, 12 zusammengefügt. Bei der Ausführungsform gemäß Fig. 5 wird der notwendige Druck über einen Stempel 13 auf den Spleißbereich ausgeübt. Der Stempel 13 ist in vertikaler Richtung bewegbar oberhalb der Karkasstrommel 5 angeordnet. Unter Einwirken des Stempels 13 werden die gedehnten Endabschnitte 11, 12 derart zusammengespleißt, dass die in dem einem Endabschnitt 11 befindlichen Festigkeitsträger 2 ein Stück in die Zwischenräume der Festigkeitsträger 2 im jeweils anderen Endabschnitt 12 gepresst werden, wie es in Fig. 7 gezeigt ist. Um den Spleißbereich weiter zu verfestigen, kann der Stempel 13 beispielsweise zusätzlich über Ultraschall in Schwingung versetzt werden und/oder erhitzt werden. Die Anzahl der Festigkeitsträger 2 pro Zentimeter im verfestigten Spleißbereich entspricht im Wesentlichen der Anzahl der Festigkeitsträger 2 pro Zentimeter in der sonstigen Karkasseinlage.

Bei einer alternativen Ausführungsform der Erfindung wird der zum Spleißen notwendige Druck über eine Rolle 14, insbesondere eine Rollsonotrode, die zusätzlich erhitzt werden kann, aufgebracht, wobei die Rolle 14 bzw. die Rollsonotrode über den Spleißbereich geführt wird. Auch eine Rolle 14 kann im Ultraschallbereich in Schwingungen versetzt werden und/oder erhitzt werden, um die Endabschnitte 11, 12 optimal zu verbinden.

Bei Bedarf kann eine zweite Karkasseinlage in analoger Weise aufgebracht werden. Anschließend wird ein Rohreifen in bekannter Weise fertig aufgebaut. Das Verfahren kann vollautomatisch ablaufen, wobei nacheinander Materialbahnstücke für den Karkasslagenaufbau zur Verfügung gestellt werden.

### Bezugsziffernliste

- 1: Materialbahn
- 2: Festigkeitsträger
- 3,4: Zubringerpfannen
- 5: Karkasstrommel
- 6: Transportband
- 7: Klemmvorrichtung
- 8: Abschnitt
- 9: Trennvorrichtung
- 10: Materialbahnstück
- 11,12: Endabschnitt
- 13: Stempel
- 14: Rollsonotrode

## Patentansprüche

1. Verfahren zum Herstellen einer Karkasseinlage eines Fahrzeugluftreifens aus einer Materialbahn (1), welche aus einer Kautschukmischung besteht, in der parallel zueinander verlaufende Festigkeitsträger (2) eingebettet sind, mit folgenden Verfahrensschritten:
- lokales Dehnen der Materialbahn (1) in Längsrichtung, wobei ein gedehnter Abschnitt (8) gebildet wird, in welchem der gegenseitige lichte Abstand (a) der Festigkeitsträger (2) gegenüber ihrem gegenseitigen Abstand im nicht gedehnten Zustand zumindest doppelt so groß ist,
- mittiges Schneiden des gedehnten Abschnittes (8), sodass ein Materialbahnstück (10) entsteht, dessen gedehnte Endabschnitte (11, 12) den Spleißbereich enthalten bzw. bilden,
- Aufwickeln jedes einzelnen Materialbahnstückes (10) auf eine Karkasstrommel (5) und überlappendes Spleißen der Endabschnitte (11, 12) unter äußerer Druckeinwirkung,
**gekennzeichnet durch**,
- das Transportieren der Materialbahn (1) mittels eines Zubringers mit Zubringerpfannen (3, 4) zur Karkasstrommel (5) und
- ein Durchführen des lokalen Dehnens der Materialbahn (1) und des mittigen Schneidens des gedehnten Abschnittes (8) am Zubringer, wobei die Materialbahn (1) lokal derart gedehnt wird, dass der gedehnte Abschnitt (8) zumindest acht Festigkeitsträger (2) enthält.

2. Verfahren nach Anspruch 1, **dadurch gekennzeichnet, dass** die Materialbahn (1) vor dem Dehnvorgang mittels zweier Klemmvorrichtungen (7) gegen zwei benachbarte Zubringerpfannen (3, 4) gedrückt und derart gegenüber den Zubringerpfannen (3, 4) fixiert wird.

3. Verfahren nach Anspruch 1 oder 2, **dadurch gekennzeichnet, dass** nach dem Klemmvorgang der gegenseitige Abstand der Zubringerpfannen (3, 4) zur Durchführung des Dehnvorganges vergrößert wird.

4. Verfahren nach einem der Ansprüche 1 bis 3, **dadurch gekennzeichnet, dass** die Materialbahn (1) über einen Abschnitt (8), der bis zu fünfzehn Festigkeitsträger (2) umfasst, gedehnt wird.

5. Verfahren nach einem der Ansprüche 1 bis 4, **dadurch gekennzeichnet, dass** die Endabschnitte (11, 12) auf der Karkasstrommel (5) mittels eines Stempels (13) gespleißt werden.

6. Verfahren nach Anspruch 5, **dadurch gekennzeichnet, dass** der Stempel (13) mittels Ultraschall in Schwingung versetzt und/oder erhitzt wird.

7. Verfahren nach einem der Ansprüche 1 bis 4, **dadurch gekennzeichnet, dass** die Endabschnitte (11, 12) auf der Karkasstrommel (5) mittels einer Rollsonotrode (14) gespleißt werden.

8. Verfahren nach Anspruch 7, **dadurch gekennzeichnet, dass** die Rollsonotrode erhitzt wird.

9. Verfahren nach einem der Ansprüche 1 bis 4, **dadurch gekennzeichnet, dass** die Endabschnitte (11, 12) auf der Karkasstrommel (5) mittels einer Rolle gespleißt werden.

10. Verfahren nach Anspruch 9, **dadurch gekennzeichnet, dass** die Rolle im Ultraschallbereich in Schwingungen versetzt wird und/oder erhitzt wird.

## Claims

1. Method for producing a carcass insert of a pneumatic vehicle tyre from a material web (1), which consists of a rubber compound in which reinforcing elements (2) running parallel to one another are embedded, comprising the following method steps:
- locally stretching the material (1) in the longitudinal direction, forming a stretched portion (8) in which the clear mutual spacing (a) of the reinforcing elements (2) is at least twice as great as their mutual spacing in the non-stretched state,
- cutting the stretched portion (8) in the middle, so as to produce a piece of material web (10) of which the stretched end portions (11, 12) contain or form the splicing region,
- winding each individual piece of material web (10) onto a carcass drum (5) and splicing the end portions (11, 12) in an overlapping manner under the effect of external pressure,
**characterized by**
- transporting the material web (1) to the carcass drum (5) by means of a servicer with servicer trays (3, 4) and
- carrying out the local stretching of the material web (1) and the cutting of the stretched portion (8) in the middle at the servicer, the material web (1) being locally stretched in such a way that the stretched portion (8) contains at least eight reinforcing elements (2) .

2. Method according to Claim 1, **characterized in that**, before the stretching operation, the material web (1) is pressed against two adjacent servicer trays (3, 4) by means of two clamping devices (7) and is in this way fixed with respect to the servicer trays (3, 4).

3. Method according to Claim 1 or 2, **characterized in that**, after the clamping operation, the mutual spacing of the servicer trays (3, 4) is increased for carrying out the stretching operation.

4. Method according to one of Claims 1 to 3, **characterized in that** the material web (1) is stretched over a portion (8) which comprises up to fifteen reinforcing elements (2).

5. Method according to one of Claims 1 to 4, **characterized in that** the end portions (11, 12) are spliced on the carcass drum (5) by means of a punch (13).

6. Method according to Claim 5, **characterized in that** the punch (13) is made to oscillate by means of ultrasound and/or is heated.

7. Method according to one of Claims 1 to 4, **characterized in that** the end portions (11, 12) are spliced on the carcass drum (5) by means of a rolling sonotrode (14).

8. Method according to Claim 7, **characterized in that** the rolling sonotrode is heated.

9. Method according to one of Claims 1 to 4, **characterized in that** the end portions (11, 12) are spliced on the carcass drum (5) by means of a roller.

10. Method according to Claim 9, **characterized in that** the roller is made to oscillate in the ultrasonic range and/or is heated.

## Revendications

1. Procédé de fabrication d'une nappe de carcasse d'un pneu de véhicule à partir d'une bande de matériau (1), qui est constituée par un mélange de caoutchouc, dans lequel sont incorporés des renforts (2) s'étendant parallèlement les uns aux autres, comprenant les étapes de procédé suivantes :
- l'étirement local de la bande de matériau (1) dans la direction longitudinale, une section étirée (8) étant formée, dans laquelle la distance intérieure mutuelle (a) entre les renforts (2) est au moins deux fois plus grande que leur distance mutuelle à l'état non étiré,
- la découpe centrale de la section étirée (8), de manière à former un morceau de bande de matériau (10), dont les sections d'extrémité étirées (11, 12) contiennent ou forment la zone d'épissure,
- l'enroulement de chaque morceau de bande de matériau individuel (10) sur un tambour de carcasse (5) et l'épissure en chevauchement des sections d'extrémité (11, 12) sous l'action d'une pression extérieure, **caractérisé par**
- le transport de la bande de matériau (1) au moyen d'un distributeur comprenant des poches de distributeur (3, 4) vers le tambour de carcasse (5) et
- une réalisation de l'étirement local de la bande de matériau (1) et de la découpe centrale de la section étirée (8) au niveau du distributeur, la bande de matériau (1) étant étirée localement de telle sorte que la section étirée (8) contienne au moins huit renforts (2) .

2. Procédé selon la revendication 1, **caractérisé en ce que** la bande de matériau (1) est pressée avant le processus d'étirement au moyen de deux dispositifs de serrage (7) contre deux poches de distributeur (3, 4) voisines et ainsi fixée par rapport aux poches de distributeur (3, 4).

3. Procédé selon la revendication 1 ou 2, **caractérisé en ce que** l'écart mutuel entre les poches de distributeur (3, 4) est agrandi après le processus de serrage pour la réalisation du processus d'étirement.

4. Procédé selon l'une quelconque des revendications 1 à 3, **caractérisé en ce que** la bande de matériau (1) est étirée sur une section (8), qui comprend jusqu'à quinze renforts (2).

5. Procédé selon l'une quelconque des revendications 1 à 4, **caractérisé en ce que** les sections d'extrémité (11, 12) sont épissées sur le tambour de carcasse (5) au moyen d'un poinçon (13).

6. Procédé selon la revendication 5, **caractérisé en ce que** le poinçon (13) est mis en oscillation et/ou chauffé au moyen d'ultrasons.

7. Procédé selon l'une quelconque des revendications 1 à 4, **caractérisé en ce que** les sections d'extrémité (11, 12) sont épissées sur le tambour de carcasse (5) au moyen d'une sonotrode rotative (14).

8. Procédé selon la revendication 7, **caractérisé en ce que** la sonotrode rotative est chauffée.

9. Procédé selon l'une quelconque des revendications 1 à 4, **caractérisé en ce que** les sections d'extrémité (11, 12) sont épissées sur le tambour de carcasse (5) au moyen d'un rouleau.

10. Procédé selon la revendication 9, **caractérisé en ce que** le rouleau est mis en oscillation et/ou chauffé dans la plage ultrasonore.
